# EUROPEAN PATENT SPECIFICATION

(11) **EP 1 661 462 B1**
(45) Date of publication and mention of the grant of the patent: **03.01.2007**
(21) Application number: 04078207.0
(22) Date of filing: 25.11.2004
(51) Int. Cl.: A21C 5/00, A21C 3/04

(54) **Apparatus for depositing edible mass**
Vorrichtung zum Ablegen von essbarer Masse.
Dispositif de dépôt de pâte consommable

(43) Date of publication of application: 31.05.2006
(73) Proprietor: AASTED-MIKROVERK APS, 3520 Farum (DK)
(72) Inventor: Haslund, Henning, Lidemark 4632 Bjaeverskov (DK)
(74) Representative: Heiden, Finn

(56) References cited:
- EP-A- 0 363 184
- EP-A- 0 909 534
- DE-A1- 4 218 385
- NL-C- 31 314
- US-A- 2 728 308
- US-A- 3 547 050
- US-A- 4 413 973
- US-A1- 2001 038 875
- "SINUSOIDAL ROTOR PUMP SMOOTHLY HANDLES DIFFICULT AND DELICATE LIQUIDS" DESIGN ENGINEERING, MORGAN-GRAMPIAN LTD. LONDON, GB, 1 April 1989 (1989-04-01), page 24, XP000111546 ISSN: 0308-8448

## Description

The present invention concerns the field of continuous working equipment utilized in the confectionery or bakery industry. The inventive apparatus is for depositing strands of mass to be cut into size or lumps of mass which could be decorated or even moulded into shape in a further processing step. The confectionery mass could for example be chocolate mass with a content or pure cocoa mass or any mass having a content of chocolate-like mass. It could be marzipan, or caramel mass or toffee mass or even jam or It could also be any type of dough to be baked into cookies or cakes or the like.

The apparatus comprises an elongated trough and at least one roller arranged longitudinally in the trough for transporting the mass in direction against the bottom of the trough. Typically two rollers are arranged. Furthermore, dosing means are arranged at the bottom having an axis of rotation extending longitudinally in the trough.

The mass of confectionery or dough is deposited continuously as strands or as gobs or lumps on an underlying conveyor. When we are talking about dough rows of lumps of dough are deposited and transported on to a baking oven and possibly further on to stations making final treatments with decorations of masses such as chocolate, chocolate-like recipes or other types of recipes with sugar content. Any type of mass used for decoration purposes on bakery articles apply. When the mass constitutes of confectionery such as chocolate or chocolate-like mass, then the mass is typically deposited for moulding purposes into underlying mould cavities or deposited directly on the conveyor belt.

The known apparatuses comprise a trough, which is formed symmetrically about each side of a central, vertical symmetry plane. In the trough are arranged at least two parallel rollers, each arranged symmetrically to each side of the central, vertical symmetry plane extending through the trough as well. The dosing means are arranged centrally and also symmetrically about each side of the symmetry plane. The two rollers are rotated in direction against each other by a separate motor. The confectionery mass or dough in the trough is then fed centrally in the trough in between the rollers and directed down towards the underlying dosing means. The dosing means are elaborated after the double cycloid principle consisting of multiple pairs of engaging toothed wheels being driven by two parallel shafts arranged to each side of the symmetry plane. Each set of engaging, toothed wheels works as a separate pump under which is arranged a depositing opening. The number of openings then corresponds to the number of lumps of mass deposited in each row extending across the conveyor. A nozzle is typically arranged under each opening giving the desired shape to each lump. The desired amount of mass in each lump is determined by utilizing vacuum to cut off the mass flow by reversing the shafts and thereby the toothed wheels. A wire-cutter could also be arranged under the row of openings when the mass is deposited as extruded strands.

When the known depositor trough from the beginning is constructed for depositing only one single type of mass, the utility is locked to that purpose only as later modifications for depositing two or three types of mass are impossible. The depositor must simply be constructed for the intended purpose and for the number of masses to be handled. The known central arrangement of the depositing flow of the mass necessitated by the central or symmetrical arrangement of the dosing means with the twin shafts with the toothed wheels makes any simultaneous external dosing of other masses to same point of delivery at the nozzle impossible at a later stage.

If the availability of depositing more than one type of mass or also ingredients is required, the known depositor must simply be build from the start containing partitionings for the desired typically two or three different masses or ingredients to be deposited. The required two feeding rollers and underlying dosing means for each mass type are arranged in each partitioning or separate chamber in the trough, so that the masses are channelled to the same central depositing opening or nozzle for being part of the same article or cake. Then, if depositing of three different types of masses are required, then three pair of feeding rollers and underlying dosing means are arranged symmetrically about the vertical plane in the trough. The building wise becomes expensive and the construction becomes voluminous and heavy and creates problems with mounting to the production line at the required position. The high weight means, that the support requires an especially strong structure as movements with the conveyor during depositing and thereby high kinetic energy is involved. Mounting and reinstall of the voluminous depositor unit for cleaning and service purposes also becomes cumbersome. If only one of the chambers are utilized during a production period then the two other chambers becomes superfluous and creates drawbacks in especially too high weight and space requirements.

Also the known solution of the toothed wheels is not particularly suitable for transporting mass with ingredients. The teeth of the opposing wheels simply provides for multiple small volumes each of which are not capable of accommodating larger ingredients such as raisins, chocolate pieces, fruit, etc which then becomes pressed, flattened out or even separated. Ingredients are also caught in between the outer top of each tooth and the dosing casing, so that the ingredients are milled or crunched.

When using the reversing technique of the shafts and the toothed wheels the cut off volume of mass varies from time to time. The known construction by which a triangle-shaped volume of mass is always left in between the teeth and the opening, simply excludes any clean cutting at the top of the opening.

EP 0 909 534 A2 discloses an apparatus according to the introductory part of claim 1 for extruding dough. The disc-shaped rotors are formed as planar discs, that transport the dough by means of friction engagement in the intermediary channels between the disc-shaped rotors during rotation. The construction creates an increasing compression of the dough from inlet towards the outlet due to the friction engagement with the dough.

The inventive solution is characterised in that the disc-shaped rotor is formed as a wave-shaped displacer.

The disc-shaped rotor is formed as a wave-shaped displacer deviating from a planar sheave. In the cylindrical chamber the wave-formed sheave extends forth and back between the opposite sides of the chamber, so that separate volumes are provided around the shaft for transporting the confectionery mass or dough to the depositing opening.

During rotation the mass is transported to the dosing means in which the rotors move the mass gently on to the depositing openings.

As the dosing means comprise only one shaft instead of two, it is secured, that the dosing means can be arranged asymmetrically in the trough. Thereby, it becomes possible to connect the trough with another trough for depositing a further mass or ingredients when required. If then only one mass type is required for depositing again at a later stage, then the surplus trough or troughs are simply removed again.

This construction-wise becomes especially optimal when the dosing means are arranged at the transition between the bottom of the trough and one of the longitudinal sidewalls of the trough. Then the one of the longitudinal sidewalls of the trough, at which the dosing is arranged, could advantageously have the shape of an essentially planar, vertical surface, which enhances mounting of a further trough or depositing unit.

When the bottom and side wall constitute part of the casing of the dosing means the depositing openings can be arranged in the transition between trough bottom and wall, so that the mass can be joined at the underlying nozzle with one or more other masses or ingredients from an optional side-mounted trough or depositing unit.

The achieved geometry of the dosing means, by which the outer periphery of the rotor gently sweeps the inner surface of the dosing housing in a wave-like intermittent movement secures, that any mass with a content of ingredients, being large or small or soft or hard are safely swept into the dosing chambers, transported trough the dosing means together with the mass and safely being deposited at the opening. The fewer and much larger dosing chambers than in the prior art secures, that no damage is made to the ingredients during passage trough the rotor housing.

When the mass reaches the deposit opening, the periphery of the rotor again sweeps the depositing opening in a wave-like intermittent movement, which provides a clean and precise cut of the mass at each depositing. Then the dosing accuracy is severely improved in comparison with the known solutions by which the triangle shaped volume of mass under the toothed rollers sets free uncontrollable varying amounts giving rise to inconsistency in amounts of mass actually deposited on the conveyor.

Also the dosing capacity with the inventive apparatus has a huge potential in comparison with the prior art with the pair of toothed rollers. When the inventive rotor has turned 5° the same amount of mass is deposited as when the prior toothed rollers have turned 180°. And yet the overall size of each inventive dosing chamber is not larger than the overall size of the prior art housing. This means that the novel dosing means has a potential capacity which is up to 36 times larger than of the prior solution.

The form and curvature of the wave-shape of the rotor could be essentially any within the inventive idea as long as it has an even and smooth extension.

A sine-wave-shaped configuration of the displacer comprising four waves each extending over 90° of the rotor has however proven to be simple and fast to manufacture.

Also, striving to eliminate the compression of the mass being dosed, a solution by which the waves of the rotor are formed by essentially straight lines connecting tops and bottoms of the waves was surprisingly successful. Especially when handling dough it is of outmost importance to the baked end result, that the texture of the dough is maintained as unchanged as possible during depositing. Only then, the dough can maintain exactly the precise texture as created and desired by the baker. This means that compression of the dough through the depositor must be minimal. However, it is well-known that the prior known depositor, such as the previously described ones has an impact on the dough texture, the extent of which could not be foreseen for the particular dough type to be handled and which must always be taken into account and compensated for.

Tests with some of the most used dough types in the bakery industry deposited with the inventive solution disclosed, that there is essentially no compression of the dough mass. So what was discovered with the above inventive solution was, that the dosing means had remarkably little or diminishing influence even on masses sensitive to shear or having a "cricital" texture, which must be preserved all the way through the process.

Generally, on basis of that knowledge and intensive tests with different masses, it could then be concluded, that when the waves of the rotor are formed by essentially straight lines connecting tops and bottoms of the waves the rotor has essentially no influence on the structure of the dough. It could be assumed that this benefit is also realised when other types of mass such as any type of confectionery mass is handled.

Also with this solution the distribution of the ingredients in the mass was preserved when passed through the dosing means.

By rotation of the shaft the angular velocity could be regulated in accordance with the size of the actual volume section at the opening, so that the deposited mass string or lump is formed as desired. When extruding a string the angular velocity could be regulated so that the string has a constant width or a constant volume of mass is deposited per time unit. Also the angular velocity could be regulated slower and slower and finally reversed when a lump is deposited for achieving a drop-like shape. With a trial and error test any configuration is achievable.

The invention is explained further below by reference to preferred embodiments as well as the drawings, in which
fig. 1 discloses schematically in perspective an apparatus according to the invention and an underlying conveyor onto which the mass is continuously deposited in rows,
fig. 2 in vertical section the apparatus of fig. 1,
fig. 3 schematically in perspective and partly in section the elongated dosing means of fig 1,
fig. 4 schematically in perspective and partly in section one of the dosing chambers of the dosing means of fig. 3,
fig. 5 schematically in perspective the single shaft with the multiple rotors of the dosing means disclosed in fig. 3,
fig. 6 two different embodiments of the pattern of the periphery of the wave-shaped rotor,
fig. 7 in vertical section two inventive apparatuses according to fig. 1 mounted mirror-like side by side, and
fig. 8 in vertical section a further depositing unit for decoration purposes mounted at the side of the inventive apparatus according to fig. 1.

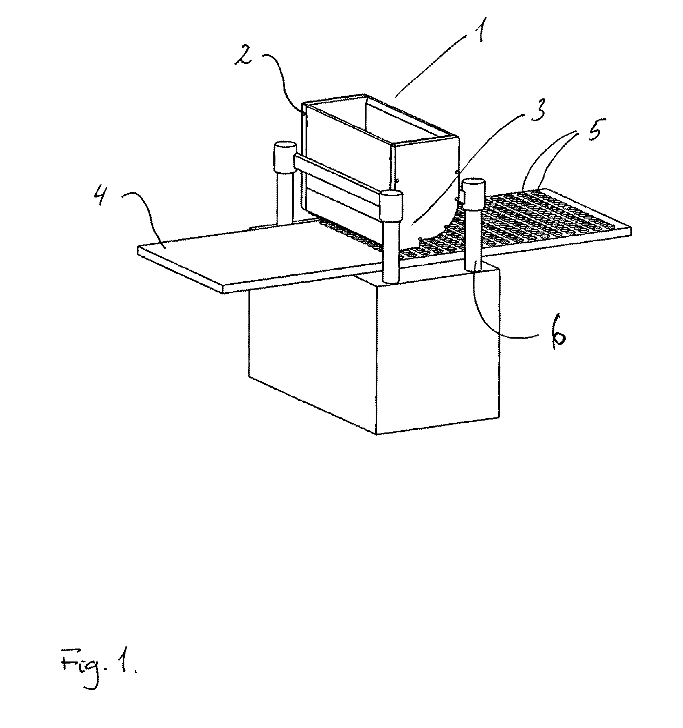

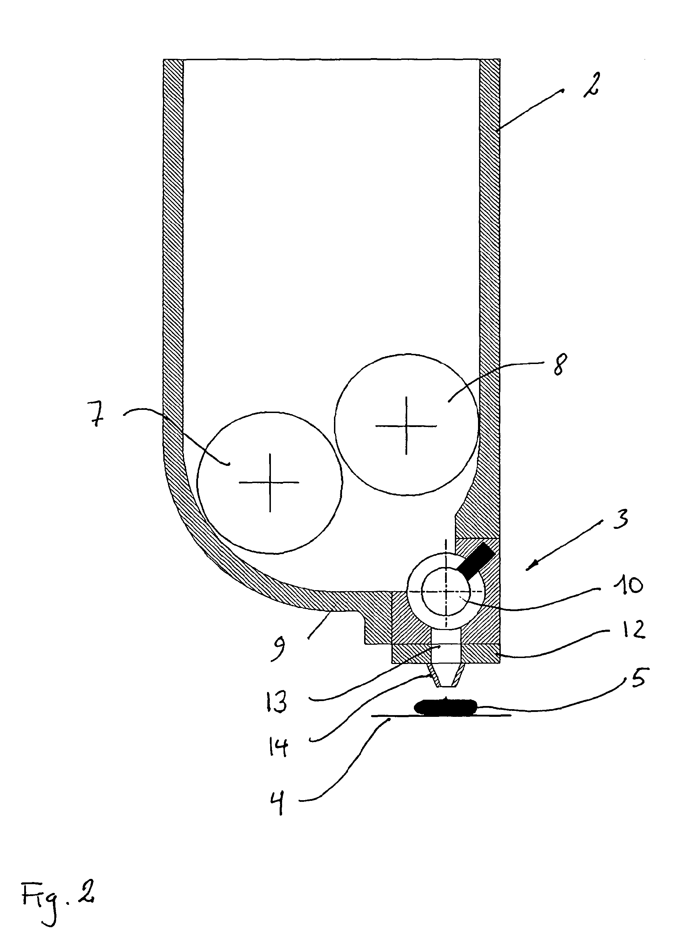

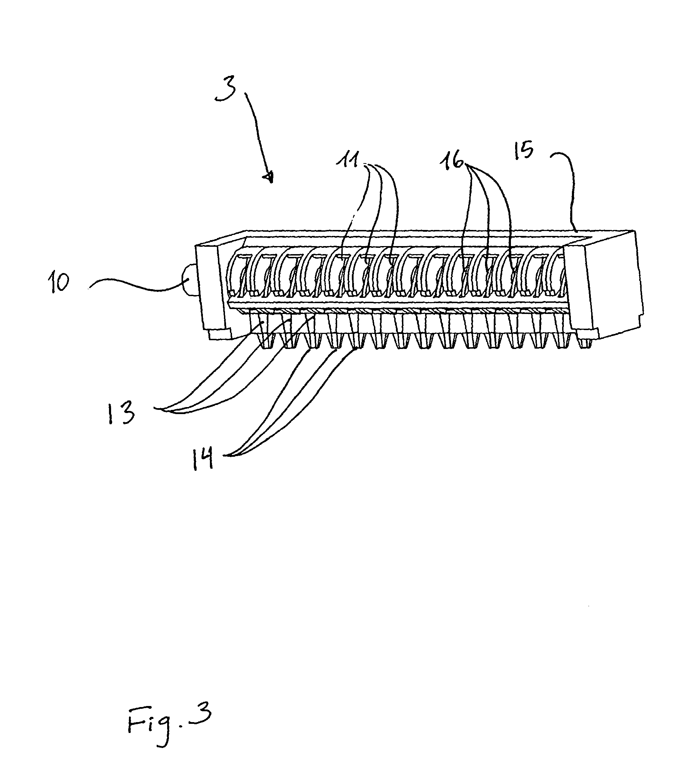

The inventive apparatus 1 schematically depicted in fig. 1 comprises an upper part, the elongated trough 2, which contains the edible mass to be deposited. When the mass to be deposited is kneaded dough, it is typically put into the trough as great lumps. However, the mass could also be continuously fed to the trough via tubes when it has sufficient flow ability as for example liquid chocolate. The lower part of the apparatus comprises the dosing means 3. The edible mass is deposited onto an underlying conveyor belt 4. By the disclosed example the mass is deposited as lumps 5 of mass consequently arranged in rows at the belt 4 as the conveyor moves the belt further on after each dosing operation. The conveyor belt 4 could be moved on continuously or with intermittent start-stop movements. The mass is typically confectionery or dough. The apparatus is supported by a schematically disclosed support frame 6.

The rows of lumps 5 of mass are transported on to a baking oven when we are talking about dough, and possibly further on to stations making final treatments with decorations of masses such as chocolate or chocolate-like recipes. When the mass constitutes of confectionery such as toffee, caramel or chocolate or chocolate-like mass, then the mass is typically deposited for moulding purposes into underlying mould cavities or directly on the conveyor as depicted in fig. 1 and fig. 2.

In the elongated trough 2 is arranged at least one roller, by the depicted example of fig. 2 two schematically disclosed rollers 7, 8, for transporting the mass in direction against the bottom 9 of the trough 2. In the trough 2 is arranged dosing means 3 extending longitudinally at the bottom 9 of the trough 2.

The dosing means 3 comprises a single, schematically disclosed and longitudinally extending shaft 10. By the depicted embodiment the dosing means 3 comprises a plurality of cylindrical dosing chambers 11, which are arranged in line having the shaft 10 as a common shaft, i.e. fig. 3.

The rollers 7, 8 and the common shaft 10 of the dosing means 3 is driven by non-disclosed motor and gear.

The dosing means 3 comprises a longitudinally extending bottom plate 12 with openings 13 for the depositing of the mass through nozzles 14. All parts of the dosing means are maintained by a housing 15. The nozzles 14 could have different shapes and sections so that different configurations of the mass being deposited is achieved.

Each dosing chamber 11 is cylindrical and in each chamber is arranged a disc-shaped rotor 16 formed as a wave-shaped displacer being rotated by the common, longitudinally extending shaft 10. During rotation the mass is transported to the dosing means 3, in which the rotors 16 move the mass gently on to the depositing openings 13.

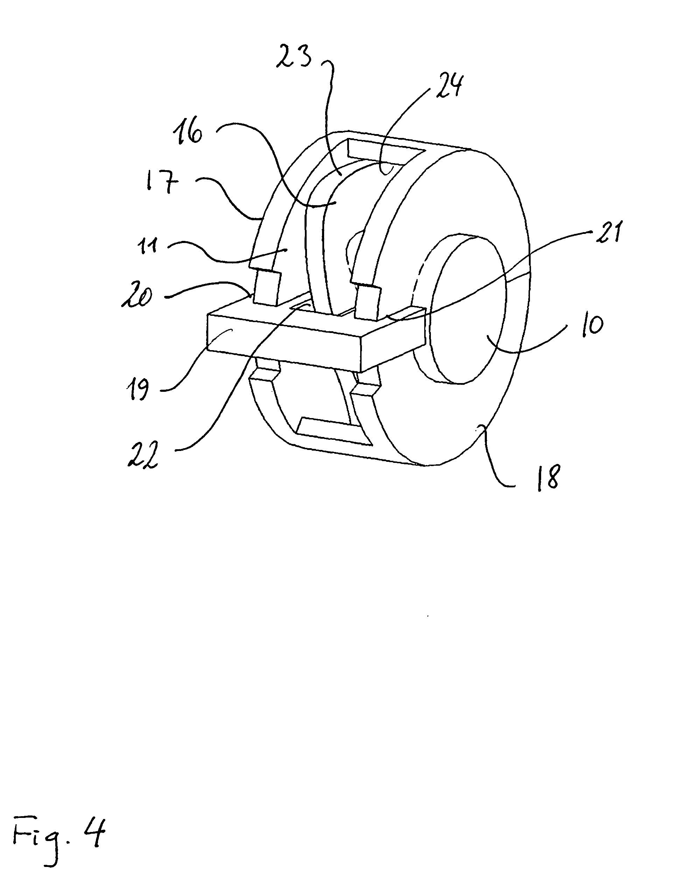

The individual dosing chambers 11 are identical in shape and configuration. Each chamber 11 is surrounded by two identical half-shells 17, 18 as disclosed in fig. 4.

The rotor 16 of each chamber 11 is arranged in between the two half-shells 17, 18. The half-shells 17, 18 are all maintained in the common housing 15, as depicted in fig. 3.

A closure plate 19 is arranged extending longitudinally and radially through each dosing chamber 11 for parting the suction side from the pressure side of the dosing chamber 11 as depicted in fig. 4. The closure plate 19 is arranged in notches 20, 21 in the half-shells 17, 18. The closure plate 19 further comprises a notch 22 into which the rotor 16 engages and slides, so that the closure plate 19 is given a reciprocal movement by the rotation of the wave-shaped rotor 16.

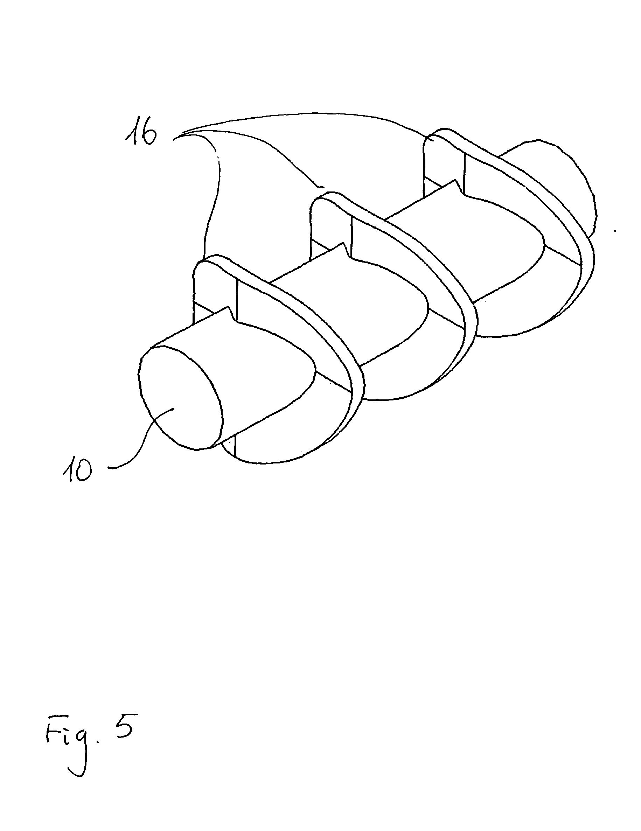

The rotors 16 are all arranged on the common shaft 10, of which part is schematically depicted in fig. 5. Typically the rotors 16 and the shaft 10 are manufactured by milling one piece into shape.

The rotors 16 are non-planar discs configured as wave-shaped displacers.

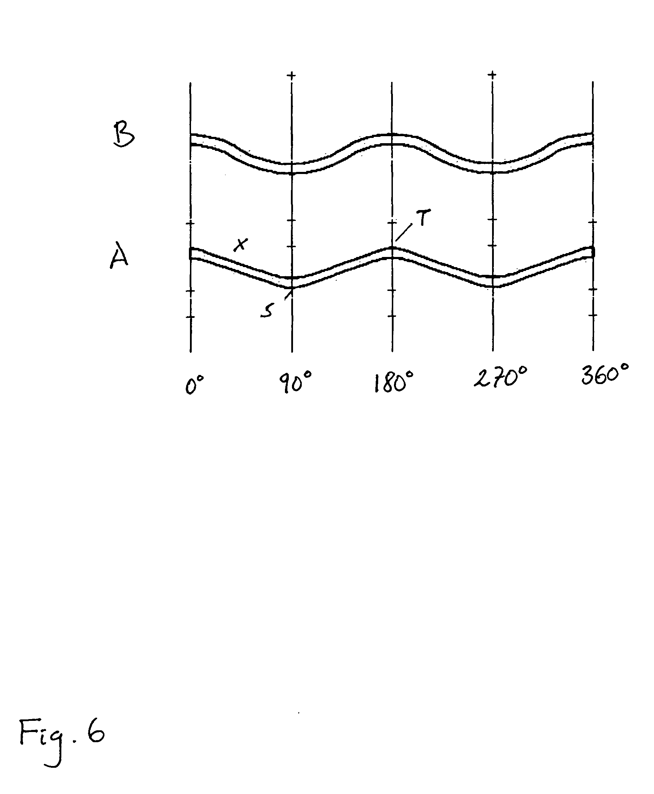

By the depicted embodiment in fig. 4 and 5 the waves of each disc-shaped rotor 16 are formed by essentially straight lines (X) connecting tops (T) and bottoms (S) of the waves. This is disclosed by example A of figure 6 depicting the pattern of the periphery of the wave-shaped rotor.

Tests with some of the most used dough types in the bakery industry deposited with the inventive solution of example A revealed, that there was essentially no compression of the dough mass. So what was discovered with the above inventive solution was, that the dosing means had remarkably little or diminishing influence even on masses sensitive to shear or having a "critical" texture, which must be preserved all the way through the process. It could be assumed that this benefit is also realised when other types of mass such as any type of confectionery mass is handled.

In fig. 6 is also disclosed an example B by which the waves are sinus shaped.

Generally, on basis of intensive testing it was concluded that a generally wave-shaped rotor handled masses with ingredients without damaging the ingredients whether the shape of the rotor was as in example A or example B or in between these.

During revolution of the shaft 10 the dosing is active, and the outer periphery 23 of the rotor 10 gently sweeps the inner surface 24 of the dosing chamber 11 in a wave-like intermittent movement. This secures, that any mass with ingredients, being large or small or soft or hard are safely swept into the dosing chamber 11, transported trough the chamber together with the mass, and safely being deposited at the deposit openings 13.

The wave-shaped rotor 16 of fig. 5 divides the dosing chamber 11 in four major enclosures active for the transportation of the mass and the ingredients trough the dosing chamber. This ensures a great capacity in comparison with the prior art.

Also when the mass reaches the deposit opening 13, the periphery 23 of the rotor 16 again sweeps the depositing opening 13 in a wave-like intermittent movement, which provides a precise apportioning of the mass at each depositing. Then the dosing accuracy is severely improved in comparison with the known solutions, by which a triangle shaped volume of mass under the toothed rollers and above the depositing opening sets free uncontrollable varying amounts, which then gives rise to inconsistency in amounts of mass actually deposited on the conveyor.

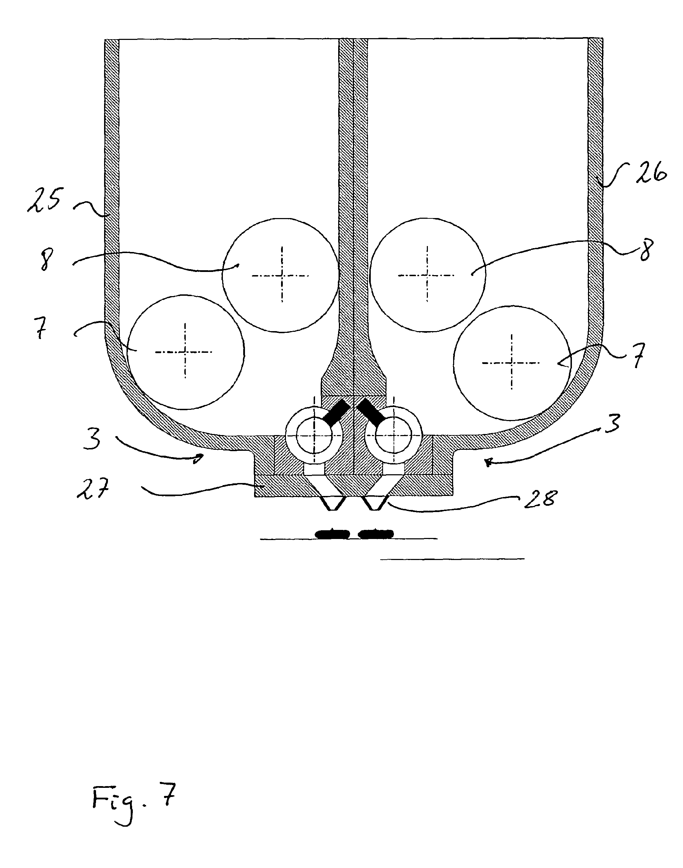

As the dosing means comprise only one shaft instead of two as in some of the prior art, it is secured, that the dosing means can be arranged asymmetrically in the trough. Thereby, it becomes possible to connect a trough 25 with another trough 26 as depicted in fig. 7 for depositing a further mass or ingredients when required. If then only one mass type is required for depositing again at a later stage, then the surplus trough 26 or troughs are simply removed again. As disclosed in fig. 7 the trough 25 and the mirror-like, side-mounted trough 26 are advantageously identical. A common plate 27 for the nozzles 28 could be arranged.

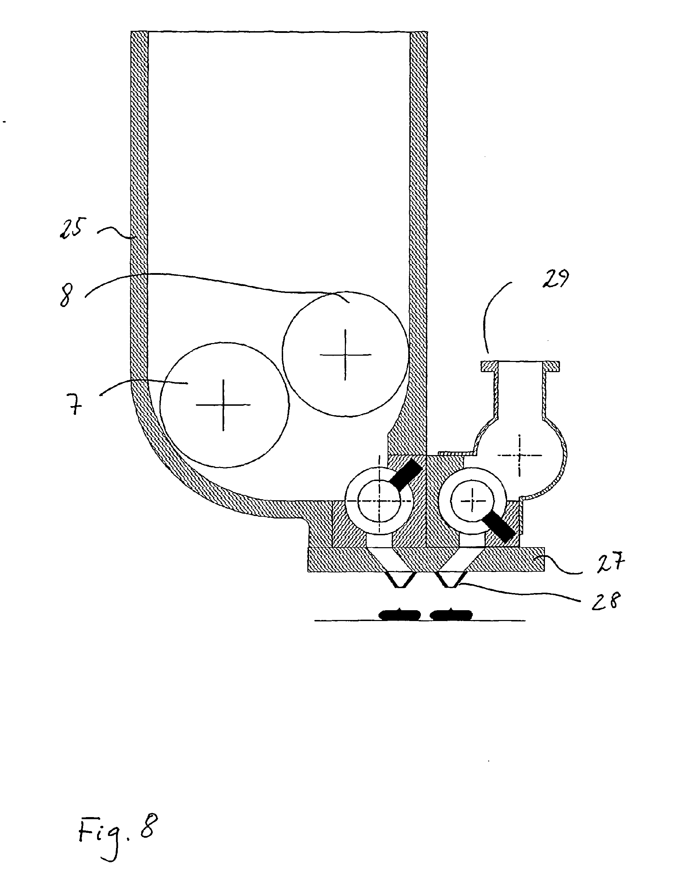

Fig. 8 is disclosed a further apparatus by which the trough 26 of fig. 7 is substituted with a depositing unit 29 for decoration purposes mounted at the side of the inventive apparatus. The unit 29 could deposit sugar, chocolate or any mass for the purpose of decorating. The unit 29 could however also deposit jam or the like.

## Claims

1. Apparatus for depositing edible mass, comprising an elongated trough (2), at least one roller (7; 8) arranged longitudinally in the trough (2) for transporting the mass in direction against the bottom (9) of the trough (2), as well as dosing means (3) extending longitudinally at the bottom (9) of the trough (2), said dosing means (3) comprising only one single, longitudinally extending shaft (10), and at least one cylindrical chamber (11), in which a disc-shaped rotor (16) is arranged for being rotated by said single, longitudinally extending shaft (10), **characterized in that** the disc-shaped rotor (16) is formed as a wave-shaped displacer.

2. Apparatus according to claim 1, **characterized in that** the waves of the disc-shaped rotor (16) are formed by essentially straight lines (X) connecting tops (T) and bottoms (S) of the waves.

3. Apparatus according to claim 1, **characterized in that** the disc-shaped rotor (10) is formed as a sine wave-shaped displacer (B).

4. Apparatus according to claim 1, **characterized in that** the wave-shaped displacer (16) comprises four waves each extending over 90° of the periphery (23) of the rotor (16).

5. Apparatus according to claim 1, **characterized in that** the chamber (11) comprises a closure plate (19) arranged longitudinally and radially through the dosing chamber (11) for parting the suction side from the pressure side of the dosing chamber, and that the plate (19) further comprises a notch (22) into which the rotor (16) engages, so that the plate (19) is given a reciprocal movement by the rotation of the rotor (16).

## Patentansprüche

1. Vorrichtung zum Ablegen essbarer Masse, umfassend einen länglichen Trog (2), wenigstens eine Walze (7; 8), die in Längsrichtung im Trog (2) zum Transport der Masse in einer gegen den Boden (9) des Trogs (2) gerichteten Richtung angeordnet ist, sowie ein Dosiermittel (3), das sich in Längsrichtung am Boden (9) des Trogs (2) erstreckt, wobei das Dosiermittel (3) lediglich eine einzelne, sich in Längsrichtung erstreckende Welle (10) und wenigstens eine zylindrische Kammer (11) umfasst, in der ein scheibenförmiger Rotor (16) angeordnet ist, um von der einzelnen, sich in Längsrichtung erstreckenden Welle (10) in Rotation versetzt zu werden, **dadurch gekennzeichnet, dass** der scheibenförmige Rotor (16) als ein wellenförmiges Verdrängungsmittel ausgebildet ist.

2. Vorrichtung gemäß Anspruch 1, **dadurch gekennzeichnet, dass** die Wellen des scheibenförmigen Rotors (16) im Wesentlichen durch gerade Linien (X), verbindende obere Scheitel (T) und untere Scheitel (S) der Wellen gebildet werden.

3. Vorrichtung gemäß Anspruch 1, **dadurch gekennzeichnet, dass** der scheibenförmige Rotor (16) als ein sinuswellenförmiges Verdrängungsmittel (B) ausgebildet ist.

4. Vorrichtung gemäß Anspruch 1, **dadurch gekennzeichnet, dass** das wellenförmige Verdrängungsmittel (16) vier Wellen umfasst, die sich jeweils über 90° des Umfangs (23) des Rotors (16) erstrecken.

5. Vorrichtung gemäß Anspruch 1, **dadurch gekennzeichnet, dass** die Kammer (11) eine Verschlussplatte (19) umfasst, die durch die Dosierkammer (11) in Längs- und Radialrichtung angeordnet ist, um die Saugseite von der Druckseite der Dosierkammer zu trennen, und dass die Platte (19) ferner einen Nocken (22) umfasst, mit dem der Rotor (16) in Eingriff steht, so dass der Platte (19) eine Hin- und Herbewegung durch die Rotation des Rotors (16) auferlegt wird.

## Revendications

1. Dispositif pour couler des masses comestibles comprenant une cuve allongée (2), au moins un rouleau (7; 8) arrangé longitudinalement dans la cuve (2) pour transporter la masse en direction vers le fond (9) de la cuve (2), ainsi que des moyens de dosage (3) étendus longitudinalement au fond (9) de la cuve (2), les moyens de dosage (3) mentionnés et seulement un arbre solitaire (10), longitudinalement étendu comprenant au moins une chambre cylindrique (11), dans laquelle un rotor (16) discoïdal est arrangé pour être tourné par l'arbre solitaire mentionné (10), étendu longitudinalement, **caractérisé en ce que** le rotor discoïdal (16) est formé en dispositif de déplacement ondulé.

2. Dispositif selon la revendication 1, **caractérisé en ce que** les ondes du rotor discoïdal (16) sont formées par des lignes (X) essentiellement droites liant ensemble les parties supérieures (T) et les parties inférieures (S) des ondes.

3. Dispositif selon la revendication 1, **caractérisé en ce que** le rotor discoïdal (10) est formé en dispositif de déplacement (B) en ondes sinusoïdales.

4. Dispositif selon la revendication 1, **caractérisé en ce que** le dispositif de déplacement ondulé (16) comprend quatre ondes chacune étendant sur 90° de la périphérie (23) du rotor (16)

5. Dispositif selon la revendication 1, **caractérisé en ce que** la chambre (11) comprend une plaque de fermeture (19) arrangée longitudinalement et radialement par la chambre de dosage (11) pour séparer le côté de succion du côté de pression de la chambre de dosage, et que la plaque (19) comprend davantage une coupure (22) dans laquelle engrène le rotor (16), de sorte qu'un mouvement réciproque soit donné à la plaque (19) par la rotation du rotor (16).
